# EUROPÄISCHE PATENTSCHRIFT

(11) **EP 2 540 675 B1**
(45) Veröffentlichungstag und Bekanntmachung des Hinweises auf die Patenterteilung: **02.04.2014**
(21) Anmeldenummer: 12173433.9
(22) Anmeldetag: 25.06.2012
(51) Int. Cl.: C02F 1/461, C02F 1/467, C02F 103/42

(54) **Tauchzelle zur elektrolytischen Reinigung von Wasser**
Ballast tank for electrolytic purification of water
Cellule submersible pour le nettoyage électrolytique d'eau

(30) Priorität: 30.06.2011 AT 9642011
(43) Veröffentlichungstag der Anmeldung: 02.01.2013
(73) Patentinhaber: pro aqua Diamantelektroden Produktion GmbH & Co KG, 8712 Niklasdorf (AT)
(72) Erfinder: Schelch, Michael, 8600 Oberaich (AT); Staber, Wolfgang, 8600 Bruck an der Mur (AT); Hermann, Robert, 8600 Oberaich (AT); Wesner, Wolfgang, 1220 Wien (AT)
(74) Vertreter: Vinazzer, Edith

(56) Entgegenhaltungen:
- US-A- 4 337 136
- US-A- 5 085 753
- US-A- 5 228 964
- US-A1- 2005 067 300
- US-B1- 6 508 929

## Beschreibung

Die Erfindung betrifft eine Tauchzelle zur elektrolytischen Reinigung von Wasser, beispielsweise Badewasser oder Brauchwasser, mit einer vom Wasser durchströmbaren, in eine längliche, beispielsweise zylindrische, elektrisch isolierende Umhüllung bzw. Ummantelung eingebauten Elektrolysezelle mit zwei unter einem gegenseitigen Abstand zueinander positionierten Kontaktelektroden, *wobei zumindest an dem einen Endbereich der Ummantelung ein Schwimmkörper angeordnet ist.*

Es ist bekannt, Elektrolysezellen zur Desinfektion von Badewasser einzusetzen. So ist beispielsweise aus der EP-A-2 336 091 eine Tauchzelle bekannt, bei der die zu einer etwa quaderförmigen Elektrolysezelle zusammengefügten Elektroden unter Freilassung von Zu- und Abfluss für das Wasser in eine Ummantelung aus Kunststoff oder Kunstharz eingebettet sind. Diese Tauchzelle ist insbesondere für kleine Pools, vorzugsweise für Whirlpools, vorgesehen und wird mit einer Steuer- und Regeleinheit betrieben, welche den Betrieb der Tauchzelle steuert und regelt, um eine optimale Desinfektion des Wassers zu gewährleisten.

*Aus der* US 6, 508, 929 A *ist eine Tauchzelle der eingangs genannten Art bekannt, welche mit einer Kombination eines Chlorgenerators mit einem Metallionenspender arbeitet, um Krankheiten verursachenden Viren, Bakterien und dergleichen im Wasser zu neutralisieren. Der Betrieb dieser Vorrichtung erfordert eine hoch konzentrierte Salzsole. Die aus der* US 5, 085, 753 A *bekannte Vorrichtung weist einen scheibenförmigen Schwimmkörper auf, an welchem mittig ein gitterartig ausgeführtes Gehäuse befestigt ist, das die Elektrolysezelle aufnimmt.*

*Die aus der* US 4,337,136 A *bekannte Vorrichtung weist einen schwimmenden Behälter auf, an dessen Unterseite eine Kunststoffumhüllung vorgesehen ist in welcher die Elektroden untergebracht sind.*

Durch die Verwendung von Brauchwasser, beispielsweise von gesammelten Regenwasser, kann der Verbrauch von wertvollem Trinkwasser deutlich reduziert werden. Bis zu 30 % der in einem Haushalt verwendeten Wassermenge lässt sich durch Brauch- bzw. Regenwasser ersetzen. Neben dem Einsparungseffekt durch die Substitution von Trinkwasser durch Regenwasser, bringt der Einsatz von Regenwasser auch eine spürbare Entlastung der kommunalen Kläranlagen, insbesondere nach größeren Regenereignissen. Durch die Retention eines Teils der Niederschläge in Regenwassersammelanlagen verringert sich die in der öffentlichen Kanalisation anfallende Abwassermenge. Das Überlaufen von Kläranlagen und die damit verbundenen Belastungen von Oberflächengewässern nehmen ab. Die Nutzung von Regenwasser bringt ferner der öffentlichen Hand und den Kommunen einige Vorteile. Durch die Entlastung der Trinkwasservorkommen durch die Substitution von wertvollem Grundwasser durch Regenwasser werden die erforderlichen Investitionen in die Trinkwasserversorgung und die Erschließung neuer Grundwasservorkommen verringert. Durch das Auffangen von Niederschlagswasser in Regenwasserbehältern, und dem damit verbundenen Speichern wird die Kanalisation entlastet, weil bei Mischkanalsystemen weniger Fremdwasser in die Kläranlagen eingebracht wird. Dadurch sind auch geringere Dimensionierungen der Rückhalte- und Ausgleichsbecken in Kläranlagen möglich.

Die Qualität des Brauchwassers/Regenwassers und deren Aufrechterhaltung über gewisse Zeiträume spielen vor allem in der wärmeren Jahreszeit und bei länger andauernden an Regen armen Perioden eine wichtige Rolle. Durch den Eintrag von Nährstoffen und Mikroorganismen und die bei höherer Temperatur des Wassers verbundene Vermehrung derselben kommt es mit der Zeit zum "Kippen" des Wassers. Zur Aufrechterhaltung einer gewissen Wasserqualität des Brauchwassers können UV-Anlagen oder Chemikalien eingesetzt werden, wobei diese kostenintensiv sind und regelmäßige Schritte bei der Anwendung erfordern.

Der Erfindung liegt daher die Aufgabe zugrunde, eine Tauchzelle der *eingangs genannten Art* derart auszuführen, dass sie sich bei *einem kompakten Aufbau* besonders einfach und ohne besondere Befestigungselemente im Wasser - sei es Wasser in einem Auffangbehälter für Regenwasser oder in einer Badeeinrichtung - verwenden lässt.

Gelöst wird die gestellte Aufgabe erfindungsgemäß dadurch, dass *die Ummantelung einen länglichen, beispielsweise zylindrisch ausgeführten Mittelteil aufweist, welcher einen Aufnahmeabschnitt aufweist, der die Elektrolysezelle aufnimmt und frei von Durchströmöffnungen ist, wobei die Ummantelung ober- und unterhalb der eingebauten Elektrolysezelle mit Durchströmöffnungen versehen ist.*

Eine gemäß der Erfindung ausgeführte Tauchzelle wird einfach auf der Wasseroberfläche positioniert. Da sie schwimmt bzw. im Wasser schwebt, wandert sie mit dem Wasserstand mit und bleibt in einer aufrechten Position, sodass eine gute Durchströmung der Elektrolysezelle gewährleistet ist. Je nach Einsatzweck erfordert der Betrieb auch keine Steuerungs- oder Regelungselektronik, beispielsweise dann, wenn sie zur Reinigung von Brauchwasser bzw. Regenwasser eingesetzt wird. *Um ein gutes Durchströmen der Elektrolysezelle zu gewährleisten, wird die Ummantelung ober- und unterhalb der Elektrolysezelle mit Durchströmöffnungen versehen. Diese Durchströmöffnungen lassen sich in großer Anzahl und auch sehr klein ausführen und können derart das Eindringen von Schmutz verhindern.*

Bei einer bevorzugten Ausführungsform der Erfindung ist die Tauchzelle netzunabhängig mit Strom versorgt. Sie braucht daher auch nicht mehr über ein außerhalb ihrer Ummantelung bzw. ihres Gehäuses verlaufendes Kabel zu verfügen. Dabei kann die Tauchzelle über eine Solarzelle oder über ein eingebautes oder externes Batteriepaket mit Strom versorgt werden. Die Solarzelle kann an der Oberseite des Schwimmkörpers angebracht sein. Alternativ ist es möglich, die Tauchzelle ans Stromnetz anzuschließen, was jedoch ein extern verlaufendes Kabel erfordert.

Bei einer Ausführungsform der Erfindung ist an beiden Endbereichen der Ummantelung je ein Schwimmkörper angeordnet, wobei diese Schwimmkörper unterschiedlichen Auftrieb besitzen. Bei einer derartigen Ausführung stabilisiert sich die schwimmende bzw. schwebende Tauchzelle besonders gut in der erwünschten, senkrecht zur Wasseroberfläche verlaufenden Lage im Wasser.

Bei einer bevorzugten Ausführung der Erfindung ist der zumindest eine Schwimmkörper ein Bestandteil der Ummantelung, insbesondere an der Ummantelung angeformt. Besonders gut stabilisierend wirken Schwimmkörper, die pilzhutförmig oder kegelstumpfförmig oder dergleichen ausgeführte Körper sind. Bevorzugt ist der Schwimmkörper ein luftgefüllter, hohler, nach außen gut abgedichteter Körper.

An den beiden Stirnseiten der Elektrolysezelle können Pfropfen, vorzugsweise aus Silikon, angebracht sein, die in Kontakt mit der Innenseite der Ummantelung stehen und Durchströmöffnungen aufweisen.

Die Elektrolysezelle erzeugt Desinfektionsmittel direkt aus dem Wasser durch elektrochemische Umwandlung. Je nach Einsatzzweck kann es nun ausreichend sein, wenn die Elektrolysezelle lediglich zwei Kontaktelektroden aufweist, es kann jedoch auch vorteilhaft sein, wenn die Elektrolysezelle zwischen den Kontaktelektroden noch weitere Elektroden, insbesondere zumindest eine bipolare Diamantpartikelelektrode, enthält.

Die Elektroden in der Elektrolysezelle sind mittels Abstandhalter aus einem elektrisch isolierendem Material voneinander beabstandet. Dabei sollen einerseits ein kompakter Aufbau und andererseits eine gute Durchströmbarkeit der Elektrolysezelle gewährleistet sein. Es gibt eine Anzahl vorteilhafter Möglichkeiten, den bzw. die Abstandhalter zwischen den Elektroden auszuführen bzw. anzuordnen. So können Abstandhalter verwendet werden, welche aus Halterrahmen oder Halterrahmenteilen bestehen, in welchem bzw. in welchen die längsseitigen Ränder der Elektroden eingesteckt bzw. gehalten sind. Eine Ausführung der Abstandhalter als dünnes Gitter aus einem elektrisch isolierenden Material wie beispielsweise Kunststoff ist besonders vorteilhaft für ein ungehindertes Durchströmen von Wasser. Der bzw. die Abstandhalter kann bzw. können auch aus polymerem Festelektrolytmaterial bestehen.

Bei Ausführungen, bei denen der/die Abstandhalter nicht gleichzeitig die Elektroden als Elektrodenpaket zusammenhalten, können die Elektroden gemeinsam mit dem/den Abstandhalter(n) mittels Klammern, Clips und dergleichen oder auch mittels lokal angebrachtem Kleber zum Elektrodenpaket zusammengefügt werden.

Auch die Kontaktelektroden können auf unterschiedliche Weise ausgeführt sein. Insbesondere können sie als mit dem Elektrodenmaterial beschichtete Plättchen oder als mit dem Elektrodenmaterial beschichtete Gitter, insbesondere Streckmetallgitter, ausgeführt sein. Letztere Ausführung ist für eine ungehinderte Durchströmung der Elektrolysezelle besonders vorteilhaft.

Weitere Merkmale, Vorteile und Einzelheiten der Erfindung werden nun anhand der schematischen Zeichnung, die Ausführungsbeispiele darstellt, näher beschrieben. Dabei zeigen
Fig. 1 eine Ansicht einer erfindungsgemäß ausgeführten Tauchzelle,
Fig. 2a bis Fig. 2d Bestandteile einer Ausführungsform einer im Inneren der Tauchzelle eingebauten Elektrolysezelle,
Fig. 3 eine Ansicht der Elektrolysezelle aus den in Fig. 2a bis Fig. 2d gezeigten Bestandteilen mit positionierten Verschlusspfropfen,
Fig. 4 eine Ansicht einer Halbschale einer Ummantelung und

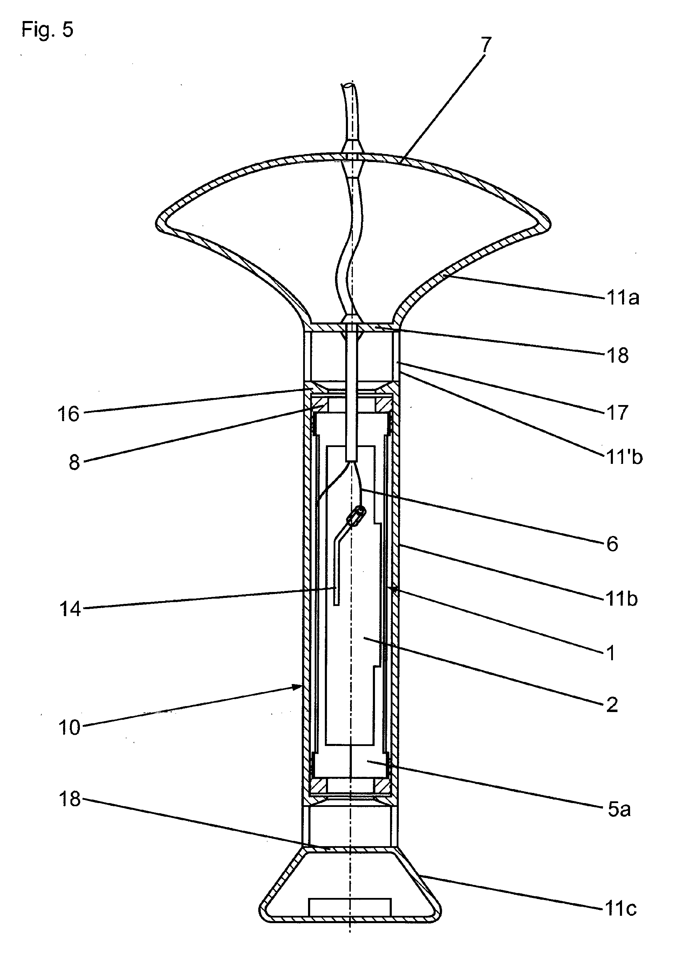

Fig. 5 einen Längsschnitt durch eine erfindungsgemäß ausgeführte Tauchzelle,
Fig. 6 Bestandteile einer weiteren Ausführungsform einer Elektrolysezelle,
Fig. 7 und Fig. 8 jeweils eine aus den in Fig. 6 gezeigten Teilen zusammengefügte Elektrolysezelle,
Fig. 9 eine Ausführungsvariante einer Halteklammer und
Fig. 10 eine Ausführungsvariante eines Fußteils der Ummantelung.

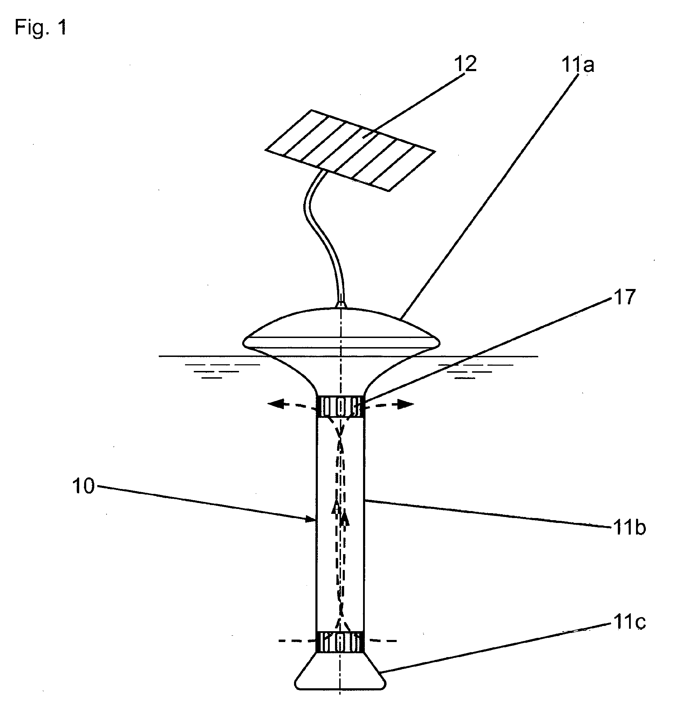

Die Figur 1 zeigt eine Tauchzelle zur elektrolytischen Reinigung von Wasser, insbesondere von Brauchwasser, wie in einem Behälter gesammeltes Regenwasser, oder auch von Badewasser, insbesondere in kleineren Becken, wie Whirlpools. Die Tauchzelle nützt daher elektrischen Strom, um ein Mittel zur Desinfektion direkt im Wasser durch elektrochemische Umwandlung des Wassers selbst oder von eingetragenen Wasserinhaltsstoffen zu erzeugen. Durch die Umwandlung dieser Wasserinhaltsstoffe entstehen Desinfektionsmittel auf Sauerstoff- und Chlorbasis.

Die Tauchzelle weist einen Schwimmkörper auf, kann unabhängig vom Wasserstand und ohne Pumpe im Wasser verwendet werden und ist derart konzipiert, dass im In-Situ-Betrieb das Wasser durch eine Elektrolysezelle 1, 1' in der Tauchzelle strömt.

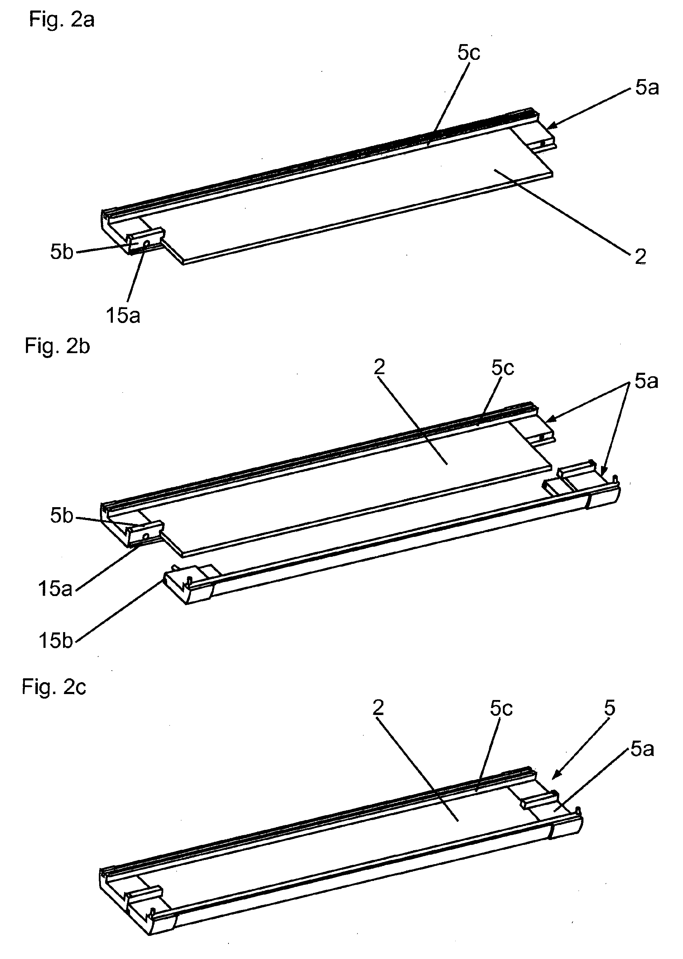

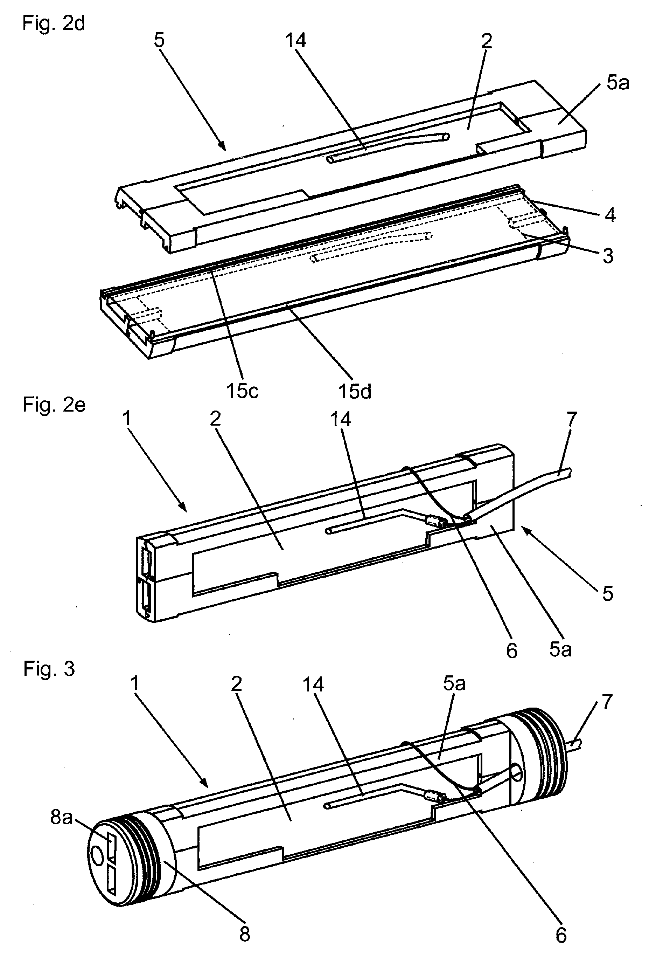

Fig. 2a bis Fig. 2e zeigen den Aufbau einer Ausführungsform einer im Inneren der Tauchzelle enthaltenen Elektrolysezelle 1. Die Elektrolysezelle 1 weist zwei parallel zueinander angeordnete Kontaktelektroden 2, 3 (Fig. 2d), welche langgestreckte rechteckig ausgeführte, dünne metallische Plättchen sind, auf. Zwischen den Kontaktelektroden 2, 3 befindet sich in einem Abstand zu diesen eine ebenfalls langgestreckt rechteckförmige bipolare Diamantpartikelelektrode 4 (Fig. 2d). Jede Kontaktelektrode 2, 3 ist in einen zweiteiligen Halterahmen 5 aus Kunststoff eingesetzt. Jeder Halterahmenteil 5a weist zwei schmale Querteile und einen langen Längsteil auf. An je einem Querteil jedes Halterahmensteils 5a ist jeweils eine Haltenase 5b ausgebildet, unter welchen Haltenasen 5b die Kontaktelektrode 2 bzw. 3 eingesetzt wird. Die Haltenasen 5b bilden gemeinsam mit Längsstegen 5c an den Längsteilen der Halterahmenteile 5a Abstandhalter für die zwischen den beiden Halterahmen 5 - mit positionierten Kontaktelektroden 2, 3 - eingesetzte Diamantpartikelelektrode 4. Fig. 2a zeigt einen der beiden Halterahmenteile 5a mit einer bereits eingesetzten Kontaktelektrode 2, Fig. 2b zusätzlich den zweiten Halterahmenteil 5a, Fig. 2c die mittels Steckverbindungen 15a, 15b in der Art von Nut-Federverbindungen zusammengefügten Halterahmenteile 5a. Fig. 2d zeigt beide Kontaktelektroden 2 ,3 in ihren Halterahmen 5 und die auf den einen Halterahmen 5 aufgesetzte Diamantpartikelelektrode 4. Fig. 2e zeigt die mittels weiterer Steckverbindungen 15c, 15d in der Art einer Nut-Federverbindung zusammengefügten Halterahmen 5. Die Diamantpartikelelektrode 4 kann zusätzlich an den Abstandhaltern, den Oberseiten der Haltenasen 5b und der Längsstege 5c, angeklebt werden. Die beiden Kontaktelektroden 2, 3 können handelsübliche Elektroden, insbesondere aus Iridium/Ruthenium oder aus Platin-beschichtetem Titanblech, sie können ferner Grafitelektroden oder Diamantelelektroden sein.

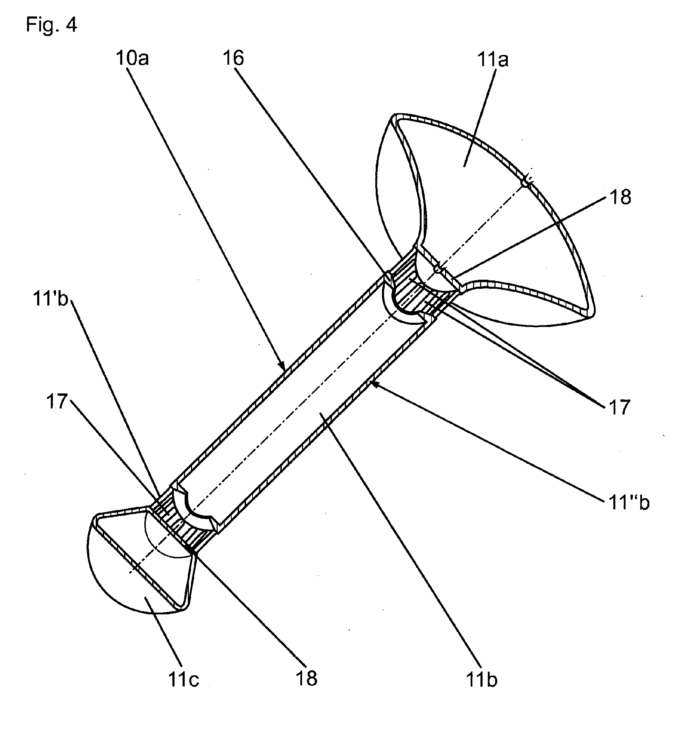

Die Kontaktierung der beiden Kontaktelektroden 2, 3 erfolgt beispielsweise mittels in den Figuren 2d und 2e angedeuteten Titanstäben 14, die an den Außenseiten der Kontaktelektroden 2, 3 durch entsprechende Anfügeverfahren, wie Schweißen, Schrauben oder Kleben angebracht sind. Mit diesen Titanstäben 14 sind elektrische Leiter 6 verbunden, welche gemeinsam, beispielsweise in einem einzigen Kabel 7, aus der Elektrolysezelle 1 nach außen geführt sind. Die erforderliche Isolation der Anschlussstellen - Kabel 7 zu den Titanstäben 14 und Titanstäbe 14 zu den Kontaktelektroden 2, 3 - kann beispielsweise mittels herkömmlicher Schrumpfschläuche erfolgen. Die elektrischen Leiter können ferner unmittelbar an den Kontaktelektroden 2, 3 angebracht werden. An den beiden längsseitigen Enden der Elektrolysezelle 1 sind, wie Fig. 3 zeigt, Pfropfen 8 aus einem wasserundurchlässigen und gut abdichtenden Material, beispielsweise aus Silikon oder einem geeigneten Kunststoff oder Kunststoffschaum, durch Aufstecken angebracht. Die beispielsweise zylindrisch geformten Pfropfen 8 sind mit entsprechenden Ausnehmungen für die Elektrolysezelle 1 und zusätzlich mit Durchströmöffnungen 8a versehen, der eine Pfropfen 8 weist ferner eine Durchgangsöffnung für das Kabel 7 auf. Die Elektrolysezelle 1 wird gemeinsam mit den positionierten Pfropfen 8 in eine Ummantelung 10 aus zwei Halbschalen 10a aus Kunststoff, die weitgehend übereinstimmend ausgeführt sind und durch nicht gezeigte Steckverbindungen zusammengefügt werden können, eingebracht. Jede Halbschale 10a (Fig. 4) ist derart geformt, dass sie gemeinsam mit der zweiten Halbschale 10a einen insbesondere pilzhutförmigen oder pilzhutähnlichen Kopfteil 11a, einen insbesondere zylindrischen Mittelteil 11b und einen sich konisch verbreiternden, insbesondere kegelstumpfförmigen Fußteil 11c bildet. Fig. 4 zeigt jeweils nur eine Hälfte dieser Bestandteile. Der Mittelteil 11b, dessen Länge etwas größer ist als die Länge der Elektrolysezelle 1 mit aufgesetzten Pfropfen 8, besteht aus einem Aufnahmeabschnitt 11"b, in welchem die Elektrolysezelle 1 aufgenommen wird, und zwei Endabschnitten 11'b. Im Inneren der Halbschale 10a ausgebildete Halteelemente 16 übergreifen randseitig die Elektrolysezelle 1 und halten diese in der Ummantelung 10.

Die Endabschnitte 11'b des Mittelteiles 11b sind mit einer Vielzahl von Durchströmöffnungen 17 versehen und vom Kopfteil 11a und vom Fußteil 11c durch Trennwände 18 abgetrennt. Bei zusammengesetzten Halbschalen 10a verbleiben zumindest im Kopfteil 11a, vorzugsweise auch im Fußteils 11c luftgefüllte Innenräume, in die kein Wasser eindringen kann, wobei der Fußteil 11c, ein wesentlich kleineres Innenvolumen aufweist als der Kopfteil 11 a. Die Steckverbindung zwischen den Halbschalen 10a sorgt, gegebenenfalls gemeinsam mit einem Kleber, für die erforderliche Dichtheit. Alternativ kann die Fügekante einer der Halbschalen 10a mit einem Dichtmaterial umspritzt sein. Zusätzlich sind in der Trennwand 18 zum Kopfteil 11a und im Kopfteil 11a Öffnungen zum Durchführen des Kabels 7 ausgebildet. Auch hier erfolgt zwischen dem Kabel 7 und der/den Halbschale(n) 10a eine entsprechende Abdichtung.

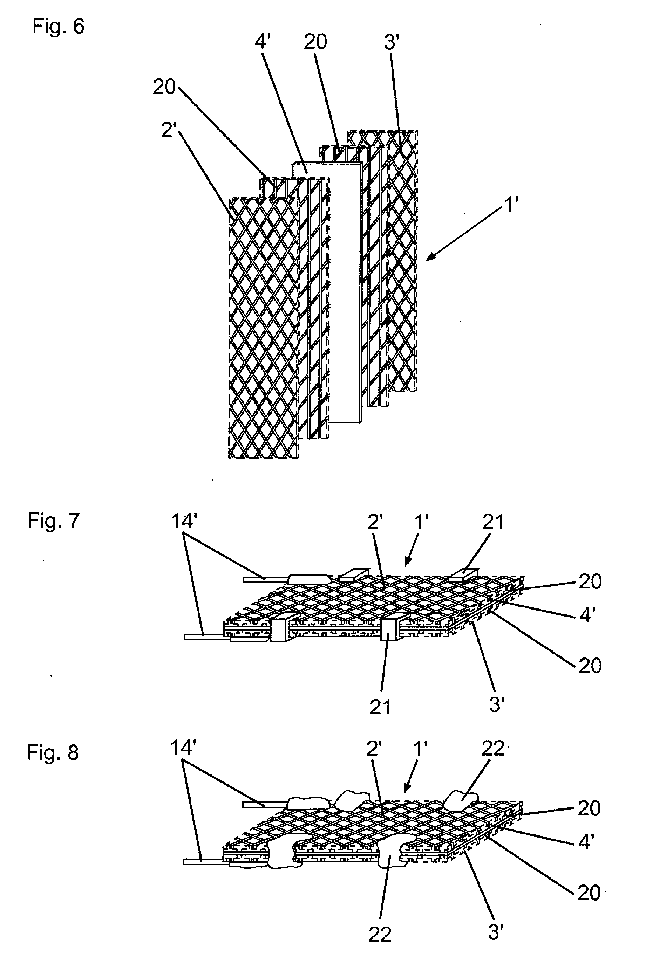

Eine weitere Ausführungsform einer erfindungsgemäßen Elektrolysezelle 1' ist in Fig. 6 bis Fig. 8 dargestellt. Die Elektrolysezelle 1' weist zwei rechteckige Kontaktelektroden 2', 3' auf, welche als Gitter, insbesondere als Streckmetallgitter, ausgeführt sind, welches mit dem Elektrodenmaterial, insbesondere Iridium/Ruthenium, Platin oder dotiertem Diamanten, beschichtet ist. Zwischen den Kontaktelektroden 2', 3' ist zumindest eine bipolare, ebenfalls rechteckige Diamantpartikelelektrode 4' positioniert, welche von den Kontaktelektroden 2', 3' durch Abstandhalter 20 aus elektrisch isolierendem Material getrennt ist. Die Abstandhalter 20 sind bei der gezeigten Ausführungsform dünne Kunststoffgitter, die zwischen jeder Kontaktelektrode 2', 3' und der Diamantpartikelelektrode 4' in Kontakt mit den Elektroden 2', 3', 4' eingefügt sind. Die Abstandhalter können ferner als dünne Plättchen ausgeführte polymere Festelektrolyten sein. Möglich sind auch Ausführungen als Kunststoffclips oder Kunststoffleisten, welche beispielsweise als an den Längsseiten der Elektroden 2', 3', 4' anbringbar sind und derart mit Nuten oder Vertiefungen versehen sind, dass die Längsseiten der Elektroden 2', 3', 4' eingefügt werden können und zwischen den Elektroden 2' und 4' sowie 3' und 4' ein geringer Abstand verbleibt. In diesem Fall wird das Elektrodenpaket durch die Abstandhalter zusammengehalten.

Wie Fig. 7 zeigt kann bei einer Ausführung mit Kunststoffgittern als Abstandhalter 20 das Elektrodenpaket durch Klammern, Clips 21 oder dergleichen aus Kunststoff oder einem anderen elektrisch isolierendem Material an den Längsseiten fixiert werden. Alternativ ist es möglich, wie in Fig. 8 gezielt, durch lokal und ebenfalls seitlich aufgebrachte Kleber 22 das Elektrodenpaket zu fixieren.

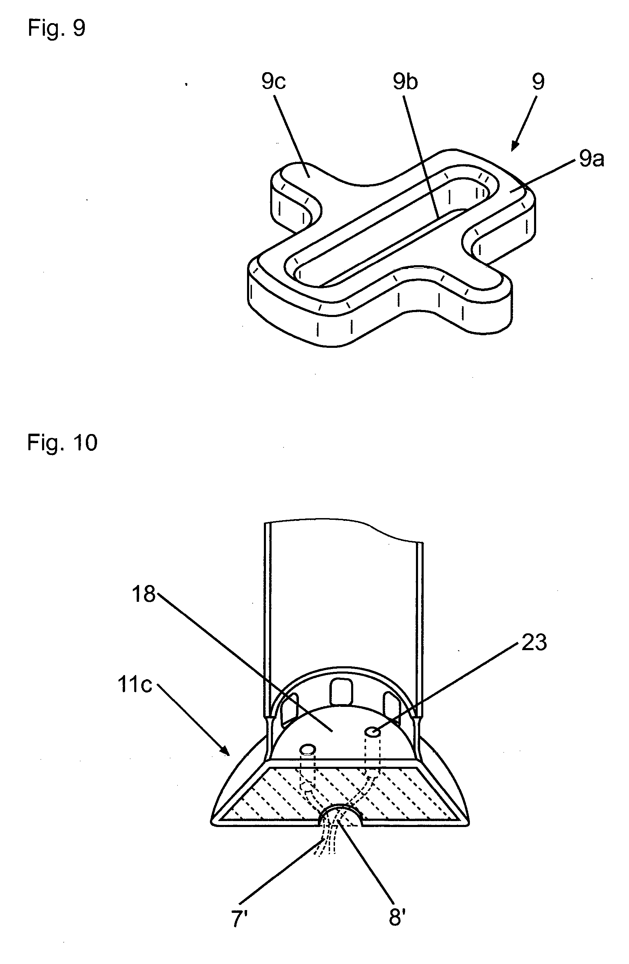

Fig. 9 zeigt eine bevorzugte Ausführungsform einer beispielsweise aus Kunststoff bestehenden Halteklammer 9 für das Elektrodenpaket, wobei insbesondere zwei oder mehr Halteklammern 9 verwendet werden. Die Halteklammer 9 weist einen länglichen Basisteil 9a mit einer mittigen langlochartigen Öffnung 9b auf, durch welche das Elektrodenpaket gesteckt und derart in der Halteklammer 9 gehalten wird. Die mittige Öffnung 9b ist entsprechend dimensioniert. Vom Basisteil 9b ragen Stützteile 9c ab, so dass sich die Halteklammern 9 an der Innenwand der Ummantelung 10 abstützen können.

Zur Kontaktierung der Kontaktelektroden 2', 3' sind zwei Titanstäbe 14' vorgesehen, welche jeweils an der Außenseite einer Kontaktelektrode 2', 3', beispielsweise mittels einer Schweißverbindung, angebracht sind.

Das Elektrodenpaket wird in den Aufnahmeabschnitt 11"b der Halbschalen 10a (Fig. 4) eingesetzt. Die Titanstäbe 14' können, wie es in Fig. 9 gezeigt ist, durch Löcher 23 in der Trennwand 18 des Fußteils 11c gesteckt und im Hohlraum des Fußteils 11c mit elektrischen Leitern 6' verbunden werden, welche beispielsweise in einem Kabel 7' nach außen geführt werden. Um die Kontaktstellen vor Wasser zu schützen, ist es vorteilhaft, den Hohlraum im Fußteil 11c, insbesondere mit einem aushärtenden Gießharz, aufzufüllen. Es ist jedoch auch möglich, die Titanstäbe 14' in den Kopfteil 11a zu führen und hier auf entsprechende abdichtende Weise die elektrische Verbindung herzustellen.

Der an den Halbschalen 10a angeformte Kopfteil 11 a bildet einen Schwimmkörper und sorgt für ein Schwimmen der Tauchzelle an der Wasseroberfläche, derart, dass die Elektrolysezelle 1 in der Tauchzelle komplett ins Wasser eintaucht. Der Fußteil 11c kann ebenfalls einen Schwimmkörper bilden und stabilisiert die Lage der Tauchzelle im Wasser. Er sorgt bei leerem Behälter dafür, dass die Durchströmöffnungen nicht vom Schmutz am Boden des Behälters verlegt werden. Je nach der Ausführung / dem Auftrieb des/der Schwimmkörper(s) kann die Tauchzelle im Wasser auch schweben.

Die Versorgung der Elektrolysezelle 1, 1' mit Strom erfolgt gemäß einer bevorzugten Ausführungsform der Erfindung mittels einer handelsüblichen Solarzelle 12, die an das Kabel 7, 7' angeschlossen wird und über eine nicht gezeigte Halterung verfügt, mittels welcher die Solarzelle 12 beispielsweise am oberen Behälterrand angeklipst oder angeschraubt werden kann. Die Solarzelle kann auch auf der Außenfläche des Schwimmkörpers angebracht sein. Alternativ zu einer Solarzelle 12 kann beispielsweise im Fußteil 11c der Ummantelung 10 ein Batteriepaket mit austauschbaren Batterien untergebracht werden. Bei dieser Ausführungsvariante wird das Kabel 7, 7' in das Innere des Fußteiles 10c geführt und im Fußteil 11c eine abgedichtete Öffnungsklappe vorgesehen. Bei weiteren Ausführungsformen kann ein externes Batterie/Akkupaket oder ein Netzteil zum Anschluss an das Stromnetz vorgesehen sein.

Die bipolare Diamantpartikelelektrode 4, 4' kann eine gemäß der WO-A-2007116004 ausgeführte Diamantpartikelelektrode sein. Diese bekannten Diamantpartikelelektroden bestehen aus synthetisch hergestellten und elektrisch leitfähigen Diamantpartikeln, welche einlagig in eine Trägerschicht aus Kunststoff eingebettet sind und an beiden Seiten der Trägerschicht freigelegt sind.

Bei einem Einsatz der Tauchzelle in gesammeltem Regenwasser, welches im Allgemeinen nur einen sehr geringen Anteil an Kalk enthält, ist es nicht erforderlich, für eine Polumkehr zu sorgen. Es kann jedoch auch eine automatisch arbeitende Polwechseleinheit vorgesehen werden, wobei eine Polumkehr erst nach einer längeren Zeit, insbesondere nach einigen Stunden, erforderlich ist. Die Tauchzelle kann ferner mit einer Steuer- und Regeleinheit versehen werden.

Ist die Tauchzelle direkt an eine Solarzelle 12 angeschlossen, so arbeitet sie üblicherweise bei Tageslicht bzw. zwischen Sonnenaufgang und Sonnenuntergang.

Die Elektrolysezelle 1, 1' kann ferner lediglich zwei Kontaktelektroden, die vorzugsweise Diamantelelektroden sind, aufweisen. Des Weiteren können mehrere bipolare Diamantelektroden, vorzugsweise Diamantpartikelelektroden, in paralleler Anordnung vorgesehen sein. Es ist ferner möglich, die Elektrolysezelle gemäß der europäischen Patentanmeldung mit der Veröffentlichungsnummer EP 2336091 A1 auszuführen und daher die Elektrolysezelle außenseitig in eine Kunststoff- bzw. Kunstharz-Ummantelung einzubetten. Zur Herstellung dieser Einbettung bzw. Ummantelung wird die fertig konfektionierte Elektrolysezelle in eine Gussform eingebracht und beispielsweise ein 2-Komponenten-Kunstharz, beispielsweise ein Polyesterharz oder ein Epoxidharz, angerührt und eingegossen. Nach dem Aushärten des Harzes wird die Tauchzelle der Gussform entnommen und es werden an den Stirnseiten nicht dargestellte Deckel sowie ein separater Kopfteil als Schwimmkörper und gegebenenfalls auch ein Fußteil mit der Ummantelung verbunden. Kopf- und Fußteil können Abschnitte mit Durchströmöffnungen aufweisen.

Die Durchströmung der Tauchzelle wird durch die aufsteigenden Gasblasen, welche an den Elektroden entstehen, unterstützt bzw. ermöglicht, wobei das Wasser über die unteren Durchströmöffnungen 17 in der Ummantelung 10 einströmt und aus den oberen Durchströmöffnungen 17 abströmt.

### Bezugsziffernliste

- 1: Elektrolysezelle
- 1': Elektrolysezelle
- 2: Kontaktelektrode
- 2': Kontaktelektrode
- 3: Kontaktelektrode
- 3': Kontaktelektrode
- 4: Diamantpartikelelektrode
- 4': Diamantpartikelelektrode
- 5: Halterahmen
- 5a: Halterahmenteil
- 5b: Haltenase
- 5c: Längssteg
- 6: elektrischer Leiter
- 6': elektrischer Leiter
- 7: Kabel
- 7': Kabel
- 8: Pfropfen
- 9: Halteklammer
- 9a: Basisteil
- 9b: Öffnung
- 9c: Stützteil
- 8a: Öffnung
- 10: Ummantelung
- 10a: Halbschale
- 11a: Kopfteil
- 11b: Mittelteil
- 11'b: Endabschnitt
- 11"b: Aufnahmeabschnitt
- 11c: Fußteil
- 12: Solarzelle
- 14: Titanstäbe
- 14': Titanstäbe
- 15a bis 15d: Steckverbindung
- 16: Halteelement
- 17: Durchströmöffnung
- 18: Trennwand
- 20: Abstandhalter
- 21: Klammer, Clips
- 22: Kleber
- 23: Loch

## Patentansprüche

1. Tauchzelle zur elektrolytischen Reinigung von Wasser, beispielsweise Badewasser oder Brauchwasser, mit einer vom Wasser durchströmbaren, in eine längliche, beispielsweise zylindrische, und elektrisch isolierende Umhüllung bzw. Ummantelung (10) eingebauten Elektrolysezelle (1, 1') mit zwei unter einem gegenseitigen Abstand zueinander positionierten Kontaktelektroden (2, 3, 2', 3'), *wobei* zumindest *an dem einen Endbereich der Ummantelung (10) ein Schwimmkörper (11a) angeordnet ist,*
**dadurch gekennzeichnet,**
**dass** *die Ummantelung (10) einen länglichen, beispielsweise zylindrisch ausgeführten Mittelteil (11b) aufweist, welcher einen Aufnahmeabschnitt (11`b) aufweist, der die Elektrolysezelle (1) aufnimmt und frei von Durchströmöffnungen ist, wobei die Ummantelung (10) ober- und unterhalb der eingebauten Elektrolysezelle (1, 1') mit Durchströmöffnungen (17) versehen ist.*

2. Tauchzelle nach Anspruch 1, **dadurch gekennzeichnet, dass** sie netzunabhängig mit Strom versorgt ist.

3. Tauchzelle nach Anspruch 2, **dadurch gekennzeichnet, dass** sie über eine Solarzelle (12) oder über ein eingebautes oder ein externes Batteriepaket mit Strom versorgt ist.

4. Tauchzelle nach Anspruch 1, **dadurch gekennzeichnet, dass** sie über das Stromnetz mit Strom versorgt ist.

5. Tauchzelle nach Anspruch 1, **dadurch gekennzeichnet, dass** an beiden Endbereichen der Ummantelung (10) je ein Schwimmkörper (11a, 11c) angeordnet ist, welche Schwimmkörper (11a, 11c) unterschiedlichen Auftrieb aufweisen.

6. Tauchzelle nach Anspruch 1 oder 5, **dadurch gekennzeichnet, dass** der/die Schwimmkörper (11a, 11c) an der Ummantelung (10) angeformt ist bzw. sind.

7. Tauchzelle nach einem der Ansprüche 1, 5 oder 6, **dadurch gekennzeichnet, dass** der Schwimmkörper (11a, 11c) ein beispielsweise pilzhut- oder kegelstumpfförmiger, hohler Körper ist.

8. Tauchzelle nach einem der Ansprüche 1 bis 7, **dadurch gekennzeichnet, dass** an den beiden Stirnseiten der Elektrolysezelle (1) zylindrische Pfropfen (8) aus Silikon oder dergleichen, welche Durchströmöffnungen aufweisen, angebracht sind.

9. Tauchzelle nach einem der Ansprüche 1 bis 8, **dadurch gekennzeichnet, dass** die Elektrolysezelle (1, 1') zwei Kontaktelektroden (2, 3, 2', 3') und zumindest eine zwischen den Kontaktelektroden (2, 3, 2', 3') positionierte bipolare Diamantelektrode, vorzugsweise eine Diamantpartikelelektrode (4, 4'), enthält.

10. Tauchzelle nach Anspruch 9, **dadurch gekennzeichnet, dass** die Elektroden (2, 3, 2', 3', 4') jeweils mittels eines Abstandhalters (20) aus einem elektrisch isolierenden Material voneinander beabstandet sind.

11. Tauchzelle nach Anspruch 10, **dadurch gekennzeichnet, dass** der Abstandhalter von
einem Halterahmen (5) oder von Halterahmenteilen (5a), in welchem bzw. in welchen die längsseitigen Ränder der Elektrode(n) eingesteckt bzw. gehalten sind, gebildet ist.

12. Tauchzelle nach Anspruch 10, **dadurch gekennzeichnet, dass** der Abstandhalter (20) ein dünnes Gitter aus einem elektrisch isolierenden Material, insbesondere aus Kunststoff, oder eine Platte bzw. Folie aus polymerem Festelektrolyt ist, wobei sich der Abstandhalter zwischen den Elektroden (2', 3', 4') und in Kontakt mit diesen befindet.

13. Tauchzelle nach Anspruch 10 oder 12, **dadurch gekennzeichnet, dass** die Elektroden (2', 3', 4') und der bzw. die Abstandhalter mittels zumindest einer Klammer (21), zumindest einem Clips oder dergleichen oder mittels lokal angebrachtem Kleber (22) zu einem Elektrodenpaket zusammengefügt sind.

14. Tauchzelle nach einem der Ansprüche 1 bis 13, **dadurch gekennzeichnet, dass** die Kontaktelektroden (2, 3, 2', 3') als mit dem Elektrodenmaterial beschichtetes Gitter, insbesondere als Streckmetallgitter, ausgeführt sind.

## Claims

1. An immersion cell for the electrolytic purification of water, such as bath water or water for domestic use, having an electrolytic cell (1, 1') through which water can flow fitted into an elongate, for example cylindrical, and electrically insulating sheath or casing (10) with two contact electrodes (2, 3, 2', 3') positioned at a mutual distance from one another, wherein a float (11a) is arranged at at least one end region of the casing (10),
**characterized in that**
the casing (10) has an elongate, for example cylindrically configured, middle part (11b), which has a receiving portion (11" b) to receive the electrolytic cell (1) and is free from through-flow openings, wherein the casing (10) is provided with through-flow openings (17) above and below the built-in electrolytic cell (1, 1').

2. The immersion cell according to claim 1, **characterized in that** it is supplied with power independently of the mains.

3. The immersion cell according to claim 2, **characterized in that** it is supplied with power from a solar cell (12) or from a built-in or external battery pack.

4. The immersion cell according to claim 1, **characterized in that** it is supplied with power from the mains.

5. The immersion cell according to claim 1, **characterized in that** a float (11a, 11c) is arranged at both end regions of the casing (10), which floats (11a, 11c) have a different buoyancy.

6. The immersion cell according to claim 1 or 5, **characterized in that** the float(s) (11a, 11c) is/are integrally formed on the casing (10).

7. The immersion cell according to one of the claims 1, 5 or 6, **characterized in that** the float (11a, 11c) is, for example, a cap or truncated cone-shaped hollow body.

8. The immersion cell according to one of the claims 1 to 7, **characterized in that** cylindrical plugs (8) made of silicone or the like, which exhibit flow-through openings, are fitted on the two front ends of the electrolytic cell (1).

9. The immersion cell according to one of the claims 1 to 8, **characterized in that** the electrolytic cell (1, 1') comprises two contact electrodes (2, 3, 2', 3') and at least one bipolar diamond electrode positioned between the contact electrodes (2, 3, 2', 3'), preferably a diamond particle electrode (4, 4').

10. The immersion cell according to claim 9, **characterized in that** the electrodes (2, 3, 2', 3', 4') are each spaced apart from one other by means of a spacer (20) made of an electrically insulating material.

11. The immersion cell according to claim 10, **characterized in that** the spacer is formed from a holding frame (5) or holding frame parts (5a), in which the longitudinal edges of the electrode(s) are inserted or held.

12. The immersion cell according to claim 10, **characterized in that** the spacer (20) is a thin grid made of an electrically insulating material, particularly made of plastic, or a plate or film of a polymeric solid electrolyte, wherein the spacers are located between the electrodes (2', 3', 4') and are in contact therewith.

13. The immersion cell according to claim 10 or 12, **characterized in that** the electrodes (2', 3', 4') and the spacer or spacers are assembled into an electrode stack by means of at least one bracket (21), at least one clip or the like or by means of locally applied adhesive (22).

14. The immersion cell according to one of the claims 1 to 13, **characterized in that** the contact electrodes (2, 3, 2', 3') are configured as a mesh, particularly a mesh of expanded metal, coated with the electrode material.

## Revendications

1. Cellule d'immersion pour la purification électrolytique d'eau, par exemple de l'eau de bain ou de l'eau industrielle, avec une cellule d'électrolyse (1, 1') pouvant être traversée par l'eau, intégrée dans une gaine ou un revêtement (10) oblong, par exemple cylindrique, et à isolation électrique, avec deux électrodes de contact (2, 3, 2', 3') positionnées à une distance mutuelle l'une par rapport à l'autre, un flotteur (11a) étant disposé au moins à l'une des zones d'extrémité du revêtement (10),
**caractérisée en ce que**
le revêtement (10) présente une partie centrale (11b) oblongue, par exemple réalisée de manière cylindrique, laquelle présente une section de logement (11"b) qui réceptionne la cellule d'électrolyse (1) et est libre d'ouvertures de passage, le revêtement (10) étant muni d'ouvertures de passage (17) au-dessus ou en-dessous de la cellule d'électrolyse (1, 1') intégrée.

2. Cellule d'immersion selon la revendication 1, **caractérisée en ce qu'**elle est alimentée en courant de manière indépendante du secteur.

3. Cellule d'immersion selon la revendication 2, **caractérisée en ce qu'**elle est alimentée en courant via une cellule solaire (12) ou via un bloc de batteries intégré ou externe.

4. Cellule d'immersion selon la revendication 1, **caractérisée en ce qu'**elle est alimentée en courant via le réseau électrique.

5. Cellule d'immersion selon la revendication 1, **caractérisée en ce que** respectivement un flotteur (11a, 11c) est disposé aux deux zones d'extrémité du revêtement (10), lesquels flotteurs (11a, 11c) présentent une flottabilité différente.

6. Cellule d'immersion selon les revendications 1 ou 5, **caractérisée en ce que** le/les flotteur(s) (11a, 11c) est ou sont moulé(s) sur le revêtement (10).

7. Cellule d'immersion selon l'une des revendications 1, 5 ou 6, **caractérisée en ce que** le flotteur (11a, 11c) est un corps creux, par exemple en forme de tête de champignon ou tronconique.

8. Cellule d'immersion selon l'une des revendications 1 à 7, **caractérisée en ce que** des bouchons (8) cylindriques en silicone ou similaire sont disposés sur les deux côtés frontaux de la cellule d'électrolyse (1), lesquels bouchons présentent des ouvertures de passage.

9. Cellule d'immersion selon l'une des revendications 1 à 8, **caractérisée en ce que** la cellule d'électrolyse (1, 1') contient deux électrodes de contact (2, 3, 2', 3') et au moins une électrode à diamant bipolaire, de préférence une électrode à particules de diamant (4, 4') positionnée entre les électrodes de contact (2, 3, 2', 3').

10. Cellule d'immersion selon la revendication 9, **caractérisée en ce que** les électrodes (2, 3, 2', 3', 4') sont respectivement espacées les unes par rapport aux autres à l'aide d'un écarteur (20) en un matériau d'isolation électrique.

11. Cellule d'immersion selon la revendication 10, **caractérisée en ce que** l'écarteur est formé par un cadre de maintien (5) ou par des éléments de cadre de maintien (5a), dans lequel ou dans lesquels les bords du côté long de l'électrode ou des électrodes sont insérés ou tenus.

12. Cellule d'immersion selon la revendication 10, **caractérisée en ce que** l'écarteur (20) est une grille mince en un matériau d'isolation électrique, en particulier en plastique, ou une plaque ou une feuille en électrolyte solide polymère, l'écarteur se trouvant entre les électrodes (2', 3', 4') et en contact avec celles-ci.

13. Cellule d'immersion selon les revendications 10 ou 12, **caractérisée en ce que** les électrodes (2', 3', 4') et le ou les écarteur(s) sont assemblés en un paquet d'électrodes à l'aide au moins d'une attache (21), au moins d'un clip ou similaire, ou bien à l'aide d'un adhésif (22) appliqué localement.

14. Cellule d'immersion selon l'une des revendications 1 à 13, **caractérisée en ce que** les électrodes de contact (2, 3, 2', 3') sont réalisées en tant que grille enduite avec le matériau d'électrode, en particulier en tant que grille en métal déployé.
